# EUROPÄISCHE PATENTSCHRIFT

(11) **EP 0 945 348 B1**
(45) Veröffentlichungstag und Bekanntmachung des Hinweises auf die Patenterteilung: **17.07.2002**
(21) Anmeldenummer: 99104110.4
(22) Anmeldetag: 02.03.1999
(51) Int. Cl.: B65B 51/30, B65B 57/16

(54) **Schlauchbeutelmaschine**
Bag forming, filling, and sealing machine
Machine de formage, remplissage et scellement de sachets

(30) Priorität: 26.03.1998 DE 19813215
(43) Veröffentlichungstag der Anmeldung: 29.09.1999
(73) Patentinhaber: Rovema Verpackungsmaschinen GmbH, 35463 Fernwald (DE)
(72) Erfinder: Kammler, Roman Dr., 67547 Worms (DE); Baur, Walter Dr., 63584 Gründau (DE)

(56) Entgegenhaltungen:
- EP-A- 0 368 016
- EP-A- 0 634 328
- EP-A- 0 765 812
- EP-A- 0 857 653
- EP-A- 0 865 989
- US-A- 5 689 942

## Beschreibung

Die Erfindung betrifft eine Schlauchbeutelmaschine mit zwei gegeneinander beweglichen und dabei einen Folienschlauch quer verschweißenden Quersiegelbacken, einer die Quersiegelbacken bewegenden Mechanik mit Antrieb einer Weitertransporteinrichtung und einer Längsschweißeinrichtung für den Folienschlauch, einer Befülleinrichtung, einer Trenneinrichtung zur Abtrennung einzelner, befüllter Schlauchbeutel vom Folienschlauch, einer Einrichtung zur Messung des Drucks der Quersiegelbacken, sowie einer Maschinensteuerung.

Eine derartige Schlauchbeutelmaschine ist aus der EP-OS 0 469 105 bekannt. Bei dieser Maschine ist eine Bahnbewegung der Quersiegelbacken von einer Maschinensteuerung fest vorgegeben. Die Quersiegelbacken verschweißen einen Folienschlauch quer zu dessen Transportrichtung. Nach jeweils einer in den Folienschlauch gespendeten Produktportion wird der Folienschlauch mittels einer Quersiegelnaht verschweißt.

Es kann bei einem bestimmten Produkt vorkommen, daß eine Produktportion nicht kompakt genug in den Folienschlauch gespendet wird und deshalb in einen quer zu verschweißenden Bereich des Folienschlauches gelangt. Insbesondere relativ leichte, großflächige Produktpartikel wie Kartoffelchips neigen zum Segeln beim freien Fall und damit zu einem auseinandergezogenen Produktschwarm, dessen Kompaktheit von Produktportion zu Produktportion sehr unterschiedlich sein kann.

In einer Quersiegelnaht eingeschlossenes Produkt kann zu einem undichten Schlauchbeutel führen. Ein derartiger Schlauchbeutel wird aus einer Verpackungsanlage entfernt. Insbesondere bei kleineren Produkteinschlüssen in einer Quersiegelnaht kann es zudem vorkommen, daß der Einschluß nicht bemerkt wird und der fehlerhafte Schlauchbeutel der Weiterverpackung zugeführt wird.

Der Erfindung liegt die Aufgabe zu Grunde, eine Schlauchbeutelmaschine der eingangs beschriebenen Art so auszugestalten, daß auch kleine Produkteinschlüsse in einer Quemaht sicher erkannt werden, und daß beim Erkennen eines Produkteinschlusses ein Signal erzeugt werden kann.

Gelöst ist die Aufgabe gemäß dem kennzeichnenden Teil des Anspruchs 1.
Danach ist an der Schlauchbeutelmaschine eine Einrichtung zum Erkennen eines zwischen den Quersiegelbacken eingeschlossenen Produkts vorgesehen, umfaßt diese Einrichtung die Quersiegelbacken und den Antrieb, ist der Antrieb ein Servomotor, bestehen die Quersiegelbacken aus einem Leichtmetall, und ist eine Auswerteelektronik vorgesehen, welche die Leistungsaufnahme des Servomotors auswertet und diese Werte in Abhängigkeit der Backenstellung an die Maschinensteuerung leitet.

Durch die erfindungsgemäße Schlauchbeutelmaschine ist erreicht, daß auch kleine Produkteinschlüsse in einer Quersiegelnaht sicher erkannt werden, und daß beim Erkennen eines Produkteinschlusses ein Signal erzeugt werden kann.

Die Erkennung eines Produkteinschlusses erfolgt durch eine Auswertung der Leistungsaufnahme des Servomotors für das Antreiben der Quersiegelbacken und einen Vergleich dieses Wertes mit einem Soll-Wert bei der Backenstellung, für die die Leistungsaufnahme ausgewertet wird. Ist die momentane Leistungsaufnahme zu hoch, so kann daraus auf einen Produkteinschluß in einer zu verschweißenden Quersiegelnaht und damit auf einen Produkteinschuß zwischen den Quersiegelbacken geschlossen werden. Eine zu hohe Leistungsaufnahme führt zu einer Reaktion der Maschinensteuerung oder zunächst nur zu einer Fehlermeldung. Es genügt, eine einzige momentane Leistungsaufnahme auszuwerten. Es kann aber auch eine Vielzahl momentaner Leistungsaufnahmen ausgewertet werden. Mehrere Messungen der momentanen Leistungsaufnahme während einer Querverschweißung erhöhen die Genauigkeit.

Da die Quersiegelbacken aus einem Leichtmetall bestehen, haben sie im Vergleich zu dem herkömmlich verwendeten Stahl eine deutlich verringerte Masse, und die Genauigkeit für die Messung und Auswertung der Leistungsaufnahme des Servomotors sind deutlich genauer als sie bei Einsatz von Stahl wären. Erst dadurch kann in zuverlässiger Weise eine Produkterkennung erfolgen.

Weitere, vorteilhafte Ausgestaltungen der erfindungsgemäßen Schlauchbeutelmaschine sind in den Ansprüchen 2 bis 7 beschrieben.

Eine kompakte elektronische Bauweise ist erreicht, wenn die Auswerteelektronik in die Maschinensteuerung integriert ist (Anspruch 2). Dagegen ist die Servicefreundlichkeit der Schlauchbeutelmaschine verbessert, wenn die Auswerteelektronik separat von der Maschinensteuerung angeordnet ist (Anspruch 3).

Ein weiterer Vorteil ist erreicht, wenn die Schlauchbeutelmaschine eine vertikale Schlauchbeutelmaschine ist (Anspruch 4), da bei einer vertikalen Schlauchbeutelmaschine die Gefahr eines Produkteinschlusses größer als bei einer horizontalen Schlauchbeutelmaschine ist.

Sind die Quersiegelbacken Teil eines rotierenden, kontinuierlich arbeitenden Backensystems, wobei die Quersiegelbacken um parallel zueinander verlaufende Achsen in entgegengesetztem Drehsinn rotieren (Anspruch 5), so kann die Verpackungsgeschwindigkeit größer als bei einem diskontinuierlich funktionierenden Backensystem sein, da ein Backenstillstand nicht vorkommt. Prinzipiell ist die Erfindung aber sowohl bei einem kontinuierlich als auch bei einem diskontinuierlich arbeitendem Backenstock einsetzbar.

Die Empfindlichkeit bezüglich einer Produkterkennung wird deutlich erhöht, wenn als Material für eine Quersiegelbacke bzw. einen bewegbaren Träger einer Quersiegelbacke insbesondere eine Magnesiumlegierung als Leichtmetall verwendet wird (Anspruch 6, Anspruch 7). Eine Magnesiumlegierung hat mit 1,7 kg/dm³ eine deutlich niedrigere Dichte als Stahl, dessen Dichte zwischen 6,3 und 8,1 kg/dm³ liegt. Somit ist die bewegte Masse bei Verwendung einer Magnesiumlegierung deutlich verringert. Da die Empfindlichkeit mit abnehmender Masse erhöht wird, kann durch den Einsatz der Magnesiumlegierung eine sehr genaue und damit auch sichere Produkterkennung erfolgen.

Die spezifische Wärmeleitfähigkeit der Magnesiumlegierung ist mit 170 W/mK deutlich höher als die von Stahl (15 bis 45 W/mK), so daß zudem die Quersiegelbacken eine deutlich genauere und gleichmäßigere Temperatur als Stahlbacken entlang ihrer Siegelflächen aufweisen.

Durch den Servomotor läßt sich die momentane Position einer Quersiegelbacke durch den Betriebszeitpunkt des Servomotors erkennen, was die Positionserkennung deutlich vereinfacht.

Werden der Maschinensteuerung sowohl Werte vom Backenantrieb für die momentane Backenstellung als auch korrespondierende Werte der Auswerteelektronik zugeführt, so kann von der Maschinensteuerung eine Reaktion auf einen Produkteinschluß in einer Quersiegelnaht gestartet werden, zum Beispiel die Betätigung eines Beutelauswerfers, womit der fehlerhafte Schlauchbeutel aus dem Weiterverpackungsvorgang entfernt wird.

Wird eine Empfindlichkeit für eine Produkterkennung als tolerierbare Abweichung eines Ist-Wertes von einem Soll-Wert für einen Wert der Auswerteelektronik einprogrammiert, so kann die Empfindlichkeit für das Erkennen eines Produkteinschlusses verändert werden. Dies ist zum Beispiel bei geänderten Maschinenparametern von Nutzen.

In den meisten Fällen ist es von Interesse, daß nur innerhalb eines gewissen Backenabstandes eine Produkterkennung erfolgen soll, da nur bei diesem, zum Beispiel nahe Null gelegenern Backenabstand eine meßbare Erhöhung des Backendrucks vorkommt. Dann ist es von Vorteil, wenn der Backenabstand einprogrammiert wird, innerhalb dessen eine Produkterkennung erfolgt, insbesondere wenn eine Messung des momentanen Backendrucks bei geschlossenen oder nahezu geschlossenen Quersiegelbacken erfolgt. Bei diesen Positionen ist die Differenz zwischen Ist-Wert und Soll-Wert im Falle eines Produkteinschlusses am größten.

Bei einer Fehlermeldung wegen eines erkannten Produkteinschlusses kann sofort ein Maschinenstopp erfolgen, damit der Grund für den Produkteinschluß beseitigt werden kann.

Im folgenden wird die Erfindung an Hand eines Ausführungsbeispiels näher erläutert.
Es zeigt:

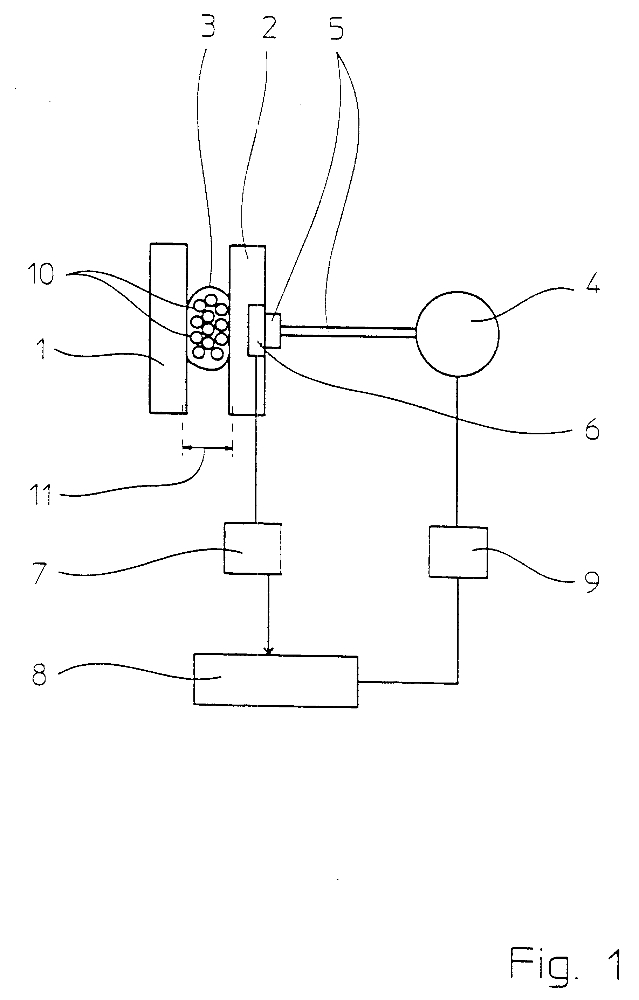

- Figur 1: in einer schematischen Darstellung das Funktionsprinzip einer Erkennung von Produkt im Inneren eines Folienschlauches, der zwischen zwei gegeneinander bewegten Quersiegelbacken einer vertikalen Schlauchbeutelmaschine verschweißt werden soll, mit einem Servomotor zum Bewegen einer Quersiegelbacke und zur Messung des momentanen Backendrucks über die Leistungsaufnahme des Servomotors, um daraus auf einen Produkteinschluß zwischen den Quersiegelbacken zu schließen.

Bei einer Schlauchbeutelmaschine werden zwei Quersiegelbacken 1,2 gegeneinander bewegt, um einen zwischen den Quersiegelbacken befindlichen Folienschlauch 3 quer zu verschweißen. Die Quersiegelbackenbewegung erfolgt mittels eines Antriebs 4 und einer bewegenden Mechanik 5.

Zeichnerisch nicht dargestellt sind eine Weitertransporteinrichtung und eine Längsschweißeinrichtung für den Folienschlauch, eine Befülleinrichtung und eine Trenneinrichtung zur Abtrennung einzelner, befüllter Schlauchbeutel vom Folienschlauch, die hinlänglich bekannte Bauelemente sind.

Die Schlauchbeutelmaschine ist eine vertikale Schlauchbeutelmaschine. Ihre Quersiegelbacken 1,2 sind Teil eines rotierenden Backensystems, wobei die Quersiegelbacken 1,2 um parallel zueinander verlaufende Achsen in entgegengesetztem Drehsinn rotieren.

An einer Quersiegelbacke 2 aus einer Magnesiumlegierung ist eine Meßeinrichtung 6 zur Messung der momentanen Leistungsaufnahme des Antriebs 4 vorgesehen. Die Meßeinrichtung 6 ist über eine separate Auswerteelektronik 7 mit einer Maschinensteuerung 8 verbunden.

Daneben ist der Antrieb 4 für die Querbackenbewegung über einen Antriebsverstärker 9 mit der Maschinensteuerung 8 verbunden. Der Antrieb 4 ist ein Servomotor.

Die Schlauchbeutelmaschine wird derart betrieben, daß die Messung der momentanen Leistungsaufnahme des Servomotors in Abhängigkeit der momentanen Backenstellung erfolgt. Dazu werden stets zeitgleich Positionswerte vom Antrieb 4 für die momentane Backenstellung, die Leistungsaufnahme des Servomotors, und dazu korrespondierende Werte der Auswerteelektronik 7 für die Backenstellung und die Leistungsaufnahme der Maschinensteuerung 8 zugeführt.

Das unbeabsichtigt eingeschlossene Produkt 10 wird dadurch erkannt, daß die momentane Leistungsaufnahme beim Pressen des Produkts 10 höher als ein vorgegebener Schwellenwert ist. Der Schwellenwert ist geringfügig höher als der entsprechende Backendruck bei gleicher Backenstellung ohne eingeklemmtes Produkt.

Die Empfindlichkeit für die Produkterkennung wurde als noch tolerierbare Abweichung des Ist-Wertes vom Soll-Wert für den gemessenen Wert der Leistungsaufnahme des Servomotors einprogrammiert. Der von der Meßeinrichtung 6 gemessene Wert wird von der Auswerteelektronik 7 ausgewertet bevor er der Maschinensteuerung zugeleitet wird.

Vor Inbetriebnahme der Schlauchbeutelmaschine wurde ein Backenabstand 11 einprogrammiert, innerhalb dessen eine Produkterkennung erfolgen soll. Nur für einen Backenabstand kleiner oder gleich dem einprogrammierten Backenabstand 11 erfolgt eine Produkterkennung mit relativ hoher Genauigkeit.

Durch die Erkennung des zwischen den Quersiegelbacken 1, 2 befindlichen Produkts 10 wird vermieden, daß ein Produkteinschluß in einer Quersiegelnaht eines Schlauchbeutels unerkannt bleibt, und ein undichter Schlauchbeutel produziert wird. Der Schlauchbeutel mit Produkteinschluß wird aus der Verpackungslinie entfernt. Bei Stillstand oder bei weiter laufender Schlauchbeutelmaschine kann die Ursache für den Produkteinschluß beseitigt werden. Die Genauigkeit der Produkterkennung ist maximal groß, da sowohl die Quersiegelbacke 2 als auch die Mechanik 5, welche ein Träger ist, aus einer Magnesiumlegierung bestehen. Dadurch können selbst relativ geringe Änderungen der Leistungsaufnahme sicher erkannt werden.

## Patentansprüche

1. Schlauchbeutelmaschine mit zwei gegeneinander beweglichen und dabei einen Folienschlauch quer verschweißenden Quersiegelbacken, einer die Quersiegelbacken bewegenden Mechanik mit Antrieb, einer Weitertransporteinrichtung und einer Langsschweißeinrichtung für den Folienschlauch, einer Befülleinrichtung, einer Trenneinrichtung zur Abtrennung einzelner, befüllter Schlauchbeutel vom Folienschlauch, einer Maschinensteuerung, und einer Einrichtung zur Messung eines Drucks der Quersiegelbacken, **dadurch gekennzeichnet, daß** an der Schlauchbeutelmaschine eine Einrichtung zum Erkennen eines zwischen den Quersiegelbacken (1, 2) eingeschlossenen Produkts (10) vorgesehen ist, daß diese Einrichtung die Quersiegelbacken (1, 2) und den Antrieb (4) umfaßt, daß der Antrieb (4) ein Servomotor ist, daß die Quersiegelbacken (1, 2) aus einem Leichtmetall bestehen, und daß eine Auswerteelektronik (7) vorgesehen ist, welche die Leistungsaufnahme des Servomotors auswertet und diese Werte in Abhängigkeit der Backenstellung an die Maschinensteuerung (8) leitet.

2. Schlauchbeutelmaschine nach Anspruch 1, **dadurch gekennzeichnet, daß** die Auswerteelektronik in die Maschinensteuerung integriert ist.

3. Schlauchbeutelmaschine nach Anspruch 1, **dadurch gekennzeichnet, daß** die Auswerteelektronik (7) separat von der Maschinensteuerung (8) angeordnet ist.

4. Schlauchbeutelmaschine nach Anspruch 1, **dadurch gekennzeichnet, daß** die Schlauchbeutelmaschine eine vertikale Schlauchbeutelmaschine ist.

5. Schlauchbeutelmaschine nach Anspruch 1 oder Anspruch 4, **dadurch gekennzeichnet, daß** die Quersiegelbacken Teil eines rotierenden Backensystems sind, wobei die Quersiegelbacken um parallel zueinander verlaufende Achsen in entgegengesetztem Drehsinn rotieren.

6. Schlauchbeutelmaschine nach Anspruch 1 oder Anspruch 5, **dadurch gekennzeichnet, daß** die Quersiegelbacken (1, 2) aus einer Magnesiumlegierung bestehen.

7. Schlauchbeutelmaschine nach Anspruch 1 oder Anspruch 6, **dadurch gekennzeichnet, daß** ein bewegbarer Träger einer Quersiegelbacke aus einer Magnesiumlegierung besteht.

## Claims

1. A tubular-bag machine comprising two transverse sealing jaws which are movable towards one another for transversely sealing a foil tube, a mechanism with a drive for moving the transverse sealing jaws, a device for further transportation and a longitudinal sealing device for the foil tube, a filling device, a separating device for separating individual filled tubular bags from the foil tube, a machine control, and a device for measuring a pressure of the transverse sealing jaws, **characterised in that** a device for detecting a product (10) enclosed between the transverse sealing jaws (1, 2) is provided on the tubular-bag machine, **in that** this device comprises the transverse sealing jaws (1, 2) and the drive (4), **in that** the drive (4) is a servomotor, **in that** the transverse sealing jaws (1, 2) comprise a light metal, and **in that** an electronic evaluation device (7) is provided which evaluates the power consumption of the servomotor and transmits these values to the machine control (8) as a function of the position of the jaws.

2. A tubular-bag machine according to claim 1, **characterised in that** the electronic evaluation device is integrated into the machine control.

3. A tubular-bag machine according to claim 1, **characterised in that** the electronic evaluation device (7) is arranged separately from the machine control (8).

4. A tubular-bag machine according to claim 1, **characterised in that** the tubular-bag machine is a vertical tubular-bag machine.

5. A tubular-bag machine according to claim 1 or claim 4, **characterised in that** the transverse sealing jaws are part of a rotating jaw system, the transverse sealing jaws rotating in opposite directions about axes extending parallel to one another.

6. A tubular-bag machine according to claim 1 or claim 5, **characterised in that** the transverse sealing jaws (1, 2) comprise a magnesium alloy.

7. A tubular-bag machine according to claim 1 or claim 6, **characterised in that** a movable carrier of a transverse sealing jaw comprises a magnesium alloy.

## Revendications

1. Ensacheuse équipée de deux mâchoires de scellement transversal mobiles l'une par rapport à l'autre et soudant transversalement un tube en feuille, d'un mécanisme déplaçant les mâchoires de scellement transversal avec l'entraînement, d'un dispositif d'acheminement ultérieur et d'un dispositif de soudage longitudinal pour le tube en feuille, d'un appareil de remplissage, d'un dispositif de séparation pour séparer des sachets tubulaires individuels et remplis du tube en feuille, d'une machine de commande, et d'un appareil pour mesurer une pression des mâchoires de scellement transversal, **caractérisée en ce qu'**il est prévu sur l'ensacheuse un dispositif pour détecter un produit (10) inclus entre les mâchoires de scellement transversal (1,2), **en ce que** ce dispositif comprend les mâchoires de scellement transversal (1,2) et l'entraînement (4), **en ce que** l'entraînement (4) est un servomoteur, **en ce que** les mâchoires de scellement transversal (1,2) sont à base d'un métal léger et **en ce qu'**il est prévu une électronique d'analyse (7) qui analyse la consommation de puissance du servomoteur et achemine ces valeurs en fonction de la position des mâchoires à la commande de machine (8).

2. Ensacheuse selon la revendication 1, **caractérisée en ce que** l'électronique d'analyse est intégrée dans la commande de machine.

3. Ensacheuse selon la revendication 1, **caractérisée en ce que** l'électronique d'analyse (7) est disposée séparément de la commande de machine (8).

4. Ensacheuse selon la revendication 1, **caractérisée en ce que** l'ensacheuse est une ensacheuse verticale.

5. Ensacheuse selon la revendication 1 ou la revendication 4, **caractérisée en ce que** les mâchoires de scellement transversal font partie d'un système à mâchoires rotatives, les mâchoires de scellement transversal tournant autour d'axes parallèles entre eux dans le sens de rotation opposé.

6. Ensacheuse selon la revendication 1 ou la revendication 5, **caractérisée en ce que** les mâchoires de scellement transversal (1,2) sont à base d'un alliage de magnésium.

7. Ensacheuse selon la revendication 1 ou la revendication 6, **caractérisée en ce qu'**un support mobile d'une mâchoire de scellement transversal est à base d'un alliage de magnésium.
